# EUROPÄISCHE PATENTSCHRIFT

(11) **EP 1 847 490 B1**
(45) Veröffentlichungstag und Bekanntmachung des Hinweises auf die Patenterteilung: **24.06.2009**
(21) Anmeldenummer: 07002875.8
(22) Anmeldetag: 10.02.2007
(51) Int. Cl.: B65G 61/00

(54) **Vorrichtung und Verfahren zur automatischen Palettierung und/oder Depalettierung von Behältern**
Device and method for automatic palletising and/or depalletising of containers
Dispositif et procédé de palettisation et/ou de dépalettisation automatique de réservoirs

(30) Priorität: 21.04.2006 DE 102006018502
(43) Veröffentlichungstag der Anmeldung: 24.10.2007
(73) Patentinhaber: EISENMANN Anlagenbau GmbH & Co. KG, 71032 Böblingen (DE)
(72) Erfinder: Starz, Reiner, 71263 Weil der Stadt (DE)
(74) Vertreter: Ostertag, Ulrich

(56) Entgegenhaltungen:
- EP-A- 1 495 998
- WO-A-20/04041692
- DE-A1- 4 213 301

## Beschreibung

Die Erfindung betrifft eine Vorrichtung zur automatischen Palettierung und/oder Depalettierung von Behältern, insbesondere von Kleinlastträgern, mit einer Steuereinrichtung, die mit wenigstens einer Sensoreinrichtung zur Erfassung der Lage und/oder der Orientierung wenigstens eines zu greifenden Behälters und mit einer Greifeinrichtung zum Greifen des Behälters funktional verbunden ist.

Außerdem betrifft die Erfindung ein Verfahren zur automatischen Palettierung und/oder Depalettierung von Behältern, insbesondere von Kleinlastträgern, bei dem die Lage und/oder die Orientierung wenigstens eines zu greifenden Behälters erfasst und abhängig von dieser der Behälter gegriffen wird.

DE-A-42 13 3 01 offenbart eine Vorrichtung und ein Verfahren zur automatischen Palettierung und/oder Depalettierung mit den Merkmalen des Oberbegriffs der Ansprüche 1 und 11, andere Vorrichtungen und Verfahren sind in EP-A-1495996 und WO-A-2004/041692 offenbart.

Insbesondere in Produktionsbetrieben der Automobilindustrie werden Kleinteile in vorzugsweise standardisierten, häufig unterschiedlich großen Kleinlastträgern (KLT) von einem Lagerort zu einer Arbeitsstation transportiert. Zum Transport ist es erforderlich, die Kleinlastträger an einer Palettierstation auf Paletten zu stapeln (Palettieren) und die Paletten zu einer Depalettiervorrichtung zu transportieren. Mit der Depalettiervorrichtung werden die Kleinlastträger von den Paletten gehoben und insbesondere auf ein Förderband gestellt (Depalettieren), mit dem sie zu der entsprechenden Arbeitsstation befördert werden.

Vom Markt her sind Vorrichtungen zum automatischen Palettieren beziehungsweise Depalettieren bekannt. Hierzu eingesetzte Roboter verfügen über Greifarme, welche in speziell eingeformte Greifschächte an den vertikalen Kanten der Kleinlastträger eingeifen und sich dort aufspreizen, um die erforderliche Greifkraft zum Anheben der Kleinlastträger zu realisieren.

Die Lage der Greifschächte relativ zur Palette beziehungsweise allgemein im Raum variiert insbesondere bei einer Anordnung von unterschiedlich großen Kleinlastträgern. Es ist daher erforderlich vor jedem Greifvorgang die Lage des zu greifenden Kleinlastträgers, insbesondere seiner Greifschächte, genau zu bestimmen und den Roboter entsprechend anzusteuern. Die Greifschächte sind verhältnismäßig klein; daher sind zu ihrer Lagebestimmung derzeit aufwendige Sensoreinrichtungen, insbesondere mit einer Vielzahl von CCD-Kameras, Scaneinheiten und taktilen Sensoren, erforderlich.

Andersartige bekannte relativ schnelle Depalettiervorrichtungen eignen sich nur für Behälterstapel. Die Behälter müssen dort als Kaminstapel bereitstehen und sind so für einen automatischen Transport auf Paletten nicht geeignet.

Aufgabe der vorliegenden Erfindung ist es, eine Vorrichtung und ein Verfahren der eingangs genannten Art so auszugestalten, dass auch unterschiedlich große und in ihrer Lage und Orientierung variierende Behälter mit Stapel- und Positionstoleranzen einfach, insbesondere mit einem möglichst geringen sensortechnischen Aufwand, und sicher automatisch palettiert und/oder depalettiert werden können.

Diese Aufgabe wird erfindungsgemäß durch eine Vorrichtung nach Anspruch 1 und ein Verfahren nach Anspruch 11 gelöst.

Als Rand des Behälters im Sinne der Erfindung wird der obere, von oben frei zugängliche Randbereich, insbesondere der mit einer Stufe versehene Stapelrand, einer Seitenwand des Behälters verstanden.

Erfindungsgemäß werden die Behälter also nicht in den Greifschächten, sondern mit dem wenigstens einen Außengreifer von außen an ihrem Rand gegriffen. Hierzu sind Außengreifer einsetzbar, die einen verhältnismäßig großen Greifbackenabstand erlauben. Auf diese Weise können die Behälter auch gepackt werden, wenn der weit geöffnete Außengreifer verhältnismäßig ungenau über dem zu greifenden Rand positioniert ist. Die exakte Position und Orientierung des Behälters, insbesondere seines Randes, muß nicht bekannt sein. Für eine grobe Bestimmung der Lage und/oder der Position genügt eine verhältnismäßig einfache Sensoreinrichtung. Insbesondere ist keine aufwendige Bildverarbeitung wie beim Stand der Technik erforderlich, wo bei mehreren Sensoreinrichtungen für jede ein Nullpunktabgleich erforderlich ist. Vorteilhaft ist außerdem, dass der Behälter an einem Rand auch dann gegriffen werden kann, wenn nur eine oder zwei Behälterwände frei zugänglich und greifbar sind. Mit der Vorrichtung können auch Behälter vollautomatisch palettiert beziehungsweise depalettiert werden, die ansonsten nicht für eine automatische Handhabung geeignet sind, da sie beispielsweise keine, abgedeckte oder defekte Greifschächte aufweisen. Es können auf diese Weise sowohl standardisierte als auch nicht standardisierte Behälter verwendet werden. Wegen seiner Beweglichkeit ist der Außengreifer auf die Größe des Behälters einstellbar, so dass unterschiedlich große Behälter palettiert beziehungsweise depalettiert werden können.

Zweckmäßigerweise kann der Außengreifer ein Zweifach-Greifer oder ein Dreifach-Greifer sein. Mit dem Zweifach-Greifer kann ein Rand einer Längs- oder einer Querseite ergriffen werden. Mit dem Dreifach-Greifer ist das Greifen einer Längs- und einer Querseite, insbesondere im Bereich einer Ecke des Behälters, möglich.

Um die Greifeinrichtung einfach auf unterschiedliche Behältergrößen einstellen und den Behälter sicher greifen zu können, kann sie wenigstens drei Außengreifer aufweisen, wobei wenigstens zwei Außengreifer insbesondere proportional zueinander motorisch bewegbar sind.

Ferner kann ein zusätzlicher Außengreifer (Gegengreifer) wenigstens vertikal bewegbar sein. Er kann so bei Bedarf abgesenkt werden, um eine insbesondere einem der anderen Außengreifer gegenüberliegende Seitenwand, insbesondere eine Längsseitenwand, des Behälters zu greifen.

Zweckmäßigerweise kann der Außengreifer pneumatisch betätigbar sein, wodurch ein schnelles Greifen des Randes ermöglicht wird.

Der Außengreifer kann außerdem über eine Sicherung gegen Herausrutschen des gegriffenen Behälters verfügen.

Ferner kann der Außengreifer über wenigstens einen Initiator verfügen, der erfasst, wenn sich die Greifbacken des Außengreifers am Rand des Behälters geschlossen haben.

Des Weiteren können die Greifbacken austauschbare Greifplatten haben. Diese können schnell und einfach insbesondere bei Verschleiß ausgewechselt werden.

Bei einer weiteren besonders vorteilhaften Ausführungsform kann die Sensoreinrichtung über ein Lasermesssystem, insbesondere über einen Laserscanner, verfügen, das einfach und schnell die Position, die Orientierung, die Größe und/oder den Typ des Behälters erfasst. Darüber hinaus kann hiermit auch ein Setzbild, das die Anordnung auch unterschiedlicher Behälter auf der Palette charakterisiert, bestimmt werden. Besonders gut eignet sich hierfür ein Laserscanner, mit dem die oberste Schicht der Palette gescannt und das Setzbild mit der Steuereinrichtung über Laufzeitmessungen ermittelt werden kann. Das Setzbild wird dann beim Depalettieren beziehungsweise Palettieren zur Steuerung der Greifeinrichtung herangezogen.

Zweckmäßigerweise können die Sensoreinrichtung und die Greifeinrichtung an einem Greifkopf insbesondere eines Roboters angeordnet sein. Die Platzierung der Sensoreinrichtung fest an dem Greifkopf räumlich neben der Greifeinrichtung hat den großen Vorteil, dass die Erkennungstoleranzen durch einen gleichbleibenden Abstand zwischen der Sensoreinrichtung und der oberster Schicht von Behältern beim Bewegen des Greifkopfes zum Erfassen des Behälters deutlich verbessert werden, da mit dem Roboter immer ein Sollabstand eingehalten wird. Außerdem ist keine separate Sensorachse erforderlich, wodurch der Aufwand, insbesondere der Teileaufwand, der Aufwand in der Ansteuerung, der Montage und der Inbetriebnahme, verringert wird. Des Weiteren sind keine aufwendigen und schwer erlernbaren Referenzmarkierungen erforderlich und es bedarf keiner Referenzfahrten zwischen dem Roboter und der Sensoreinrichtung, da die Sensorkoordinaten direkt den Koordinaten der Greifeinrichtung zugeordnet werden können.

Durch das Entfallen der Kollisionsgefahr mit der Sensoreinrichtung wird außerdem der Bewegungsfreiraum des Roboters deutlich vergrößert.

Das erfindungsgemäße Verfahren zeichnet sich dadurch aus, dass wenigstens ein Außengreifer der Greifeinrichtung relativ zu dem Behälter bewegt wird und mit wenigstens zwei Greifbacken wenigstens einen Rand des Behälters greift. Auf diese Weise ist ein positionstolerantes Greifen des Behälters möglich, ohne dass zuvor eine aufwendige Positionsbestimmung durchgeführt werden muß.

Die Lage und/oder die Orientierung des Behälters kann hierbei zweckmäßigerweise optisch erfasst werden, insbesondere kann der Behälter mit einem Laser durch Laufzeitmessungen abgetastet werden, hierauf kann der Außengreifer zum Rand des Behälters bewegt werden, derart, dass mindestens zwei der Greifbacken beidseitig des Randes positioniert sind und anschließend wenigstens eine der Greifbacken auf die zweite zu geführt wird, so dass der Rand zwischen den beiden Greifbacken eingeklemmt wird.

Ein Ausführungsbeispiel der Erfindung wird nachfolgend anhand der Zeichnung näher erläutert; es zeigen
- Figur 1: schematisch die Draufsicht einer Depalettierstation mit einem einen Greifkopf aufweisenden Roboter;
- Figur 2: schematisch eine Seitenansicht der Depalettierstation aus Figur 1 im Bereich des Roboters, hier entgegen der Förderichtung der zu entladenden Paletten betrachtet;
- Figur 3: schematisch eine andere Seitenansicht der Depalettierstation aus Figur 1 im Bereich des Roboters, hier senkrecht zur Förderichtung der zu entladenden Paletten betrachtet;
- Figur 4: schematisch den Greifkopf aus Figur 1 in der längsseitigen Ansicht, hier mit einem gegriffenen Kleinlastträger;
- Figur 5: schematisch den Greifkopf aus Figur 1 in der Untersicht;
- Figur 6: schematisch den Greifkopf aus Figur 1 in der querseitigen, teilweise aufgebrochenen Ansicht mit offenen Außengreifern über einem Kleinlastträgern;
- Figur 7: schematisch der Greifkopf aus Figur 6 mit geschlossenen Außengreifern.

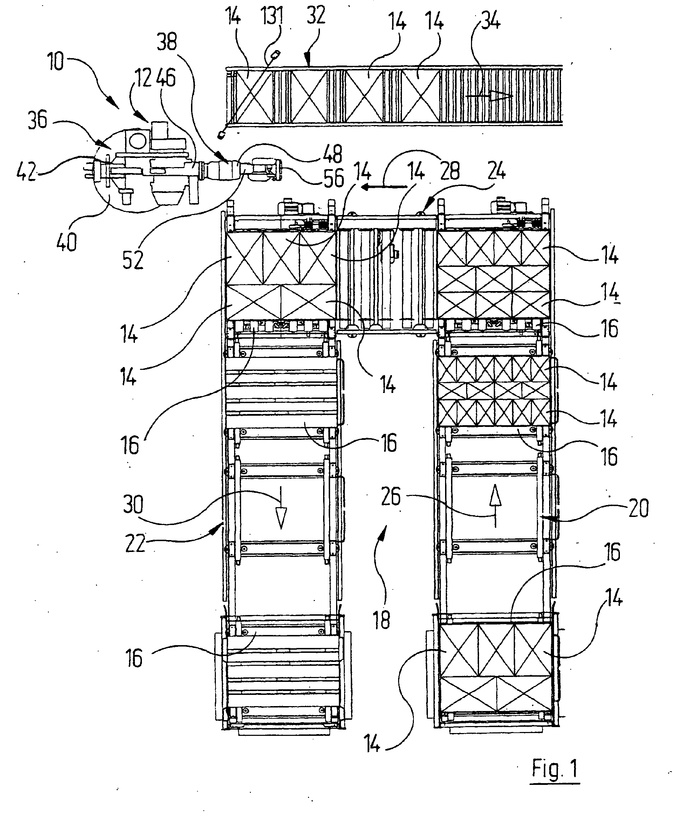

In Figur 1 ist eine insgesamt mit dem Bezugszeichen 10 versehene Depalettierstation mit einer Depalettiervorrichtung 12 zur automatischen Depalettierung von unterschiedlich großen Kleinlastträgern 14 in Draufsicht dargestellt.

Die Kleinlastträger 14 sind auf Paletten 16 gestapelt.

Die Paletten 16 können Stahlpaletten, Europaletten und/oder Europaletten auf Stahlpaletten sein.

Die Depalettierstation 10 verfügt über eine Fördereinrichtung 18 mit drei U-förmig angeordneten Förderbandbereichen 20, 22 und 24. Der in Figur 1 rechte Schenkel der Fördereinrichtung 18 wird durch den von unten kommenden geraden Zufuhr-Förderbandbereich 20 und der linke Schenkel durch den nach unten führenden geraden Abfuhr-Förderbandbereich 22 gebildet. Der Zufuhr-Förderbandbereich 20 und der Abfuhr-Förderbandbereich 22 sind über den geraden, in Figur 1 oben verlaufenden Übergabe-Förderbandbereich 24 miteinander verbunden. Der an den Abfuhr-Förderbandbereich 22 angrenzende Endbereich des Übergabe-Förderbandbereichs 24 befindet sich in Reichweite der Depalettiervorrichtung 12.

Die Fördereinrichtung 18 und die Depalettiervorrichtung 12 sind mit einer nicht gezeigten Steuereinrichtung der Depalettierstation 10 funktional verbunden.

Über den Zufuhr-Förderbandbereich 20 sind die mit Kleinlastträgern 14 beladenen Paletten 16 dem Übergabe-Förderbandbereich 24 in Richtung eines ersten Pfeils 26 (Zufuhr-Förderrichtung 26), in Figur 1 von unten nach oben, zuführbar.

Im Übergabe-Förderbandbereich 24 sind die Paletten 16 vom Zufuhr-Förderbandbereich 20 zum Abfuhr-Förderbandbereich 22, in Figur 1 von rechts nach links, in Richtung eines zweiten Pfeils 28 (Übergabe-Förderrichtung 28) förderbar und in dessen Endbereich mit der Depalettiervorrichtung 12 depalettierbar.

Die leeren Paletten 16 sind vom Übergabe-Förderbandbereich 24 über den Abfuhr-Förderbandbereich 22 in Richtung eines dritten Pfeils 30 (Abfuhr-Förderrichtung 30), in Figur 1 von oben nach unten, vorzugsweise zu einem nicht gezeigten Palettenlager wegführbar.

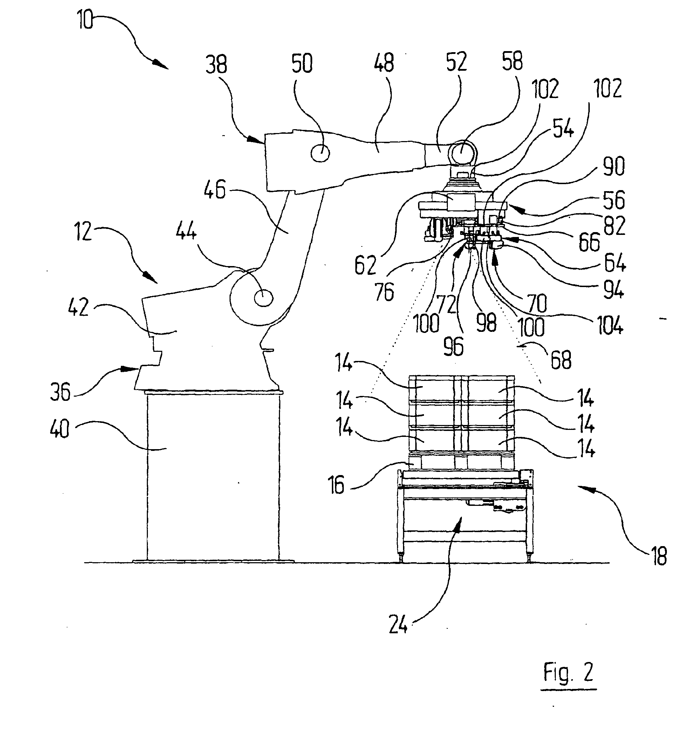

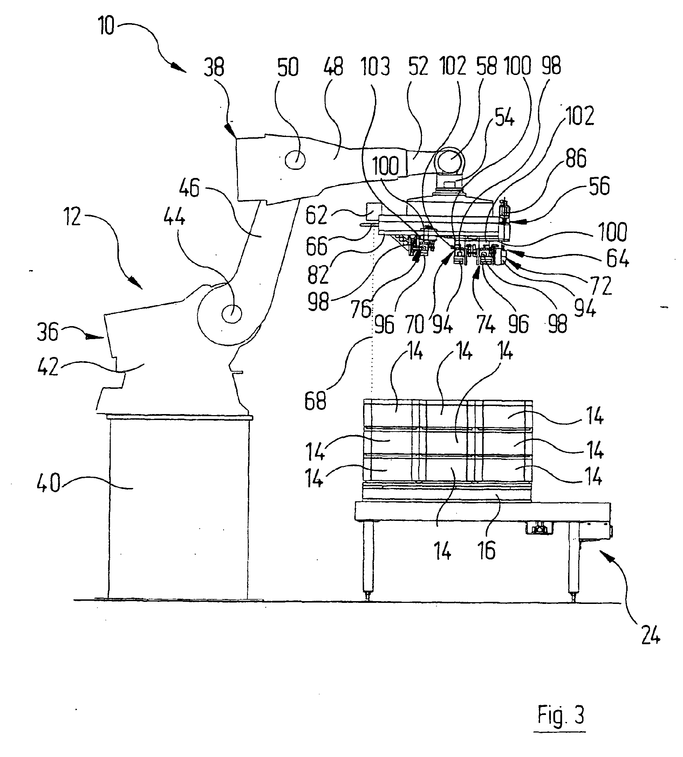

Die zugeführten Paletten 16 sind mit Kleinlastträgern 14 unterschiedlicher Art, Größe, Lage und Orientierung beladen. Ihre obersten Schichten weisen also von oben betrachtet unterschiedliche Setzbilder auf. Die Kleinlastträger 14 stehen lose auf den Paletten 16 und sind somit in ihrer exakten Position undefiniert. Beispielsweise befinden sich auf der Palette 16, die in Figur 1 oben links zum Depalettieren im Bereich der Depalettiervorrichtung 12 bereitsteht, insgesamt fünf gleich große, quaderförmige, oben offene Kleinlastträger 14 in der obersten Schicht. Drei davon sind mit ihrer Längsseite und zwei mit ihrer Schmalseite quer zu Übergabe-Förderrichtung 28 ausgerichtet. Insgesamt sind auf dieser Palette 16 drei identische Schichten aufeinander gestapelt (Figuren 2 und 3). Die gleiche Anordnung findet sich auch auf der letzen Palette 16 im Zufuhr-Förderbandbereich 20, unten rechts wieder. Die oberste Schicht der zweiten Palette 16 im Übergabe-Förderbandbereich 24, oben rechts, weist zehn gleiche, mittelgroße Kleinlastträger 14 auf, die teils mit ihrer Längsseite und teils mit ihrer Schmalseite quer zur Übergabe-Förderrichtung 28 ausgerichtet sind. Eine dritte Palette 16, die sich in Zufuhr-Förderrichtung 26 hinter der zweiten, in Figur 1 unter dieser, befindet, hat in der obersten Schicht 16 gleich große, kleine Kleinlastträger 14 in zwei unterschiedlichen Orientierungen geladen.

Parallel zum Übergabe-Förderbandbereich 24 verläuft in einem Abstand zu diesem ein Förderband 32, welches von der Depalettiervorrichtung 12 in Richtung eines vierten Pfeils 34 (Förderbandrichtung 34), in Figur 1 nach rechts, zu einer oder mehreren nicht gezeigten Arbeitsstation(en) führt. Die Depalettiervorrichtung 12 ist so platziert, dass mit ihr die Kleinlastträger 14 von den Paletten 16 auf das Förderband 32 gehoben werden können.

Die Depalettiervorrichtung 12 umfasst einen 6-achsigen Industrieroboter 36 mit einem Greifarm 38 und einem Greifkopf 56. In Figur 1 ist der Greifarm 38 in seiner Ruheposition zwischen dem Übergabe-Förderbandbereich 24 und dem Förderband 32 gezeigt. In den Figuren 2 und 3 ist der Roboter 36 in der jeweiligen Seitenansicht in Übergabe-Förderrichtung 28 beziehungsweise senkrecht dazu dargestellt. Der Einfachheit halber wurde in den Figuren 2 und 3 auf eine isometrische Darstellung des Roboters 36 verzichtet. Darüber hinaus sind dort auch der Zufuhr-Förderbandbereich 20 und der Abfuhr-Förderbandbereich 22 nicht gezeigt.

Der Roboter 36 steht auf einem Sockel 40, in den Figuren 2 und 3 unten links, der in Übergabe-Förderrichtung 28 hinter dem Übergabe-Förderbandbereich 24 angeordnet ist (Figur 1). Ein Drehkörper 42 ist oben auf dem Sockel 40 um eine in den Figuren nicht sichtbare vertikale erste Achse drehbar befestigt. Seitlich an dem Drehkörper 42, in den Figuren 2 und 3 rechts, der Fördereinrichtung 18 zugewandt, ist um eine horizontale zweite Achse 44 der Greifarm 38 im Ganzen vertikal schwenkbar befestigt. Der Greifarm 38 ist in Längsrichtung zweigeteilt. Die beiden etwa gleich langen Greifarmteile 46 und 48 sind um eine parallel zur zweiten Achse 44 verlaufende horizontale dritte Achse 50 relativ zueinander schwenkbar miteinander verbunden. Ein freier Endbereich 52 des vom Drehkörper 42 abgewandten Greifarmteils 48 ist um eine in den Figuren nicht sichtbare vierte Achse, welche senkrecht zur dritten Achse 50 im wesentlichen in Längsrichtung des abgewandten Greifarmteils 48 verläuft, drehbar.

Am freien Endbereich 52 des Greifarmteils 48 ist ein Flansch 54 für den Greifkopf 56 befestigt. Der Flansch 54 ist um eine fünfte Achse 58 schwenkbar. Die fünfte Achse 58 verläuft senkrecht zur vierten Achse. Im Normalfall, wie er in Figuren 2 und 3 dargestellt ist, verläuft die fünfte Achse 58 horizontal parallel zur zweiten Achse 44 und zur dritten Achse 50, senkrecht zu der durch die beiden zueinander geschwenkten Greifarmteile 46 und 48 aufspannbaren vertikalen Ebene.

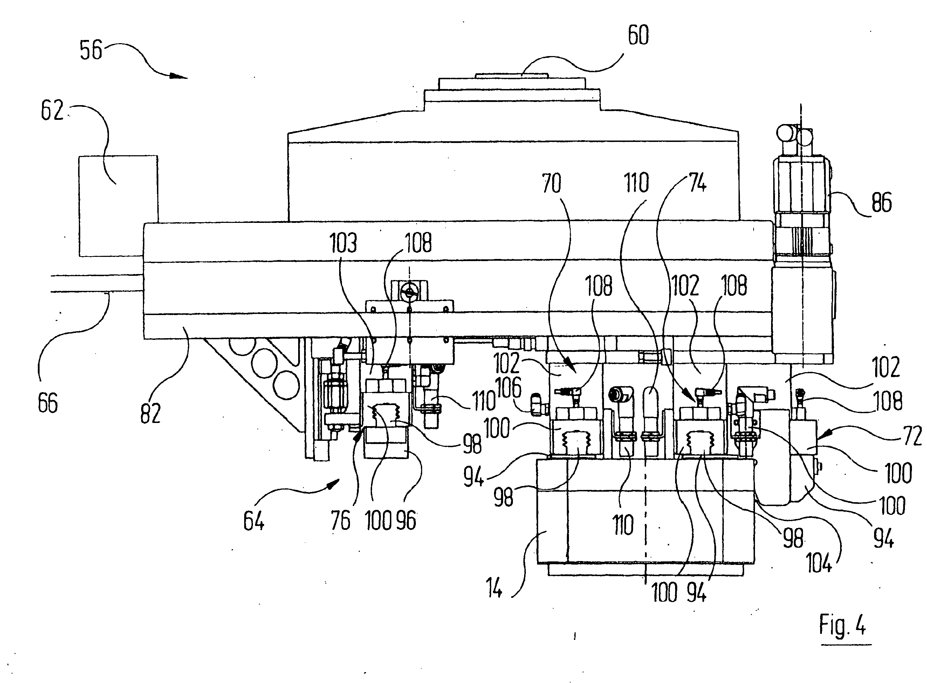

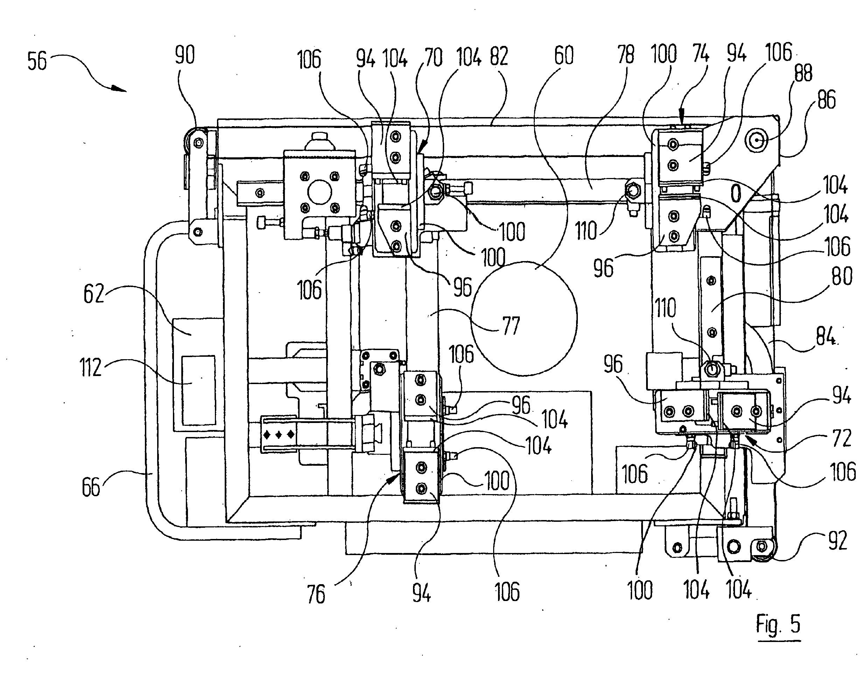

An dem Flansch 54 hängt der Greifkopf 56. Der Greifkopf 56 verfügt über eine stabile, in der Untersicht in Figur 5 rechteckige Rahmenkonstruktion vorzugsweise aus Aluminium, mit der er an dem Flansch 54 befestigt ist. Er ist um eine in den Figuren 4 bis 7 sichtbare sechste Achse 60, welche senkrecht zur fünften Achse 58 verläuft, drehbar. Im dargestellten Normalfall verläuft die sechste Achse 60 vertikal, so dass der Greifkopf 56 in der Horizontalen drehbar ist.

Die Achsen bewirken, dass die räumliche Lage des Greifkopfes 56 verändert werden kann, ohne dass sich seine Ausrichtung im Raum, insbesondere die vertikale Ausrichtung der sechsten Achse 60, also seine Neigung, ändert. Insbesondere kann durch geeignete Drehungen um die entsprechenden Achsen der Greifkopf 56 in und entgegen der Übergabe-Förderrichtung 28 bewegt werden, ohne dass seine horizontale Ausrichtung verändert wird. In seiner Grundstellung ist der Greifarm 38 so ausgerichtet, dass der Greifkopf 56 bei einer vorgegebenen maximalen Stapelhöhe in sicherem Abstand von der obersten Schicht von Kleinlastträgern 14 positioniert ist und die Palette 16 ungehindert in den Bereich des Roboters 36 eingefahren werden kann.

Darüber hinaus ist der Greifkopf 56 so ausgebildet, dass er in gewissem Ausmaß verkippen kann. So kann er Schieflagen eines Kleinlastträgers 14 ausgleichen, wenn dieser einseitig mit der Stufe seines Einstapelrandes auf dem oberen Rand eines benachbarten Kleinlastträgers 14 aufliegt.

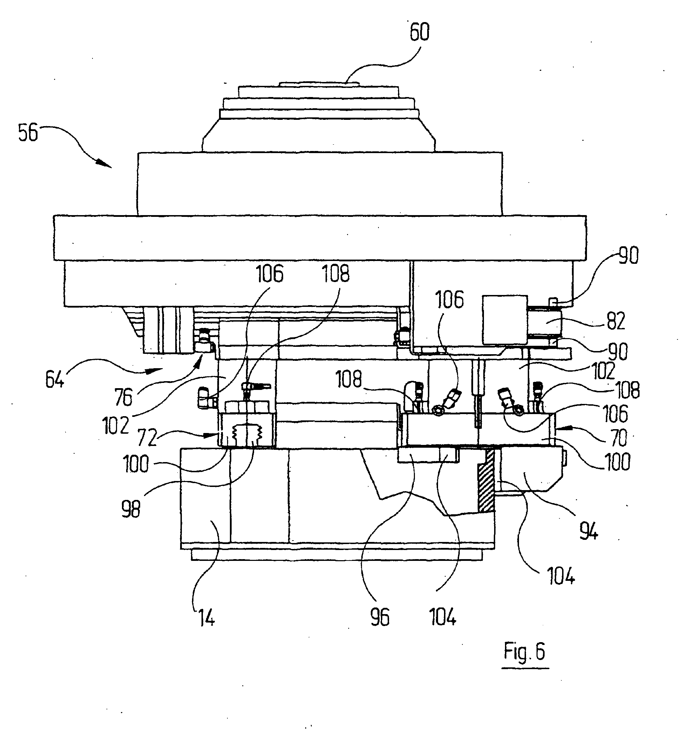

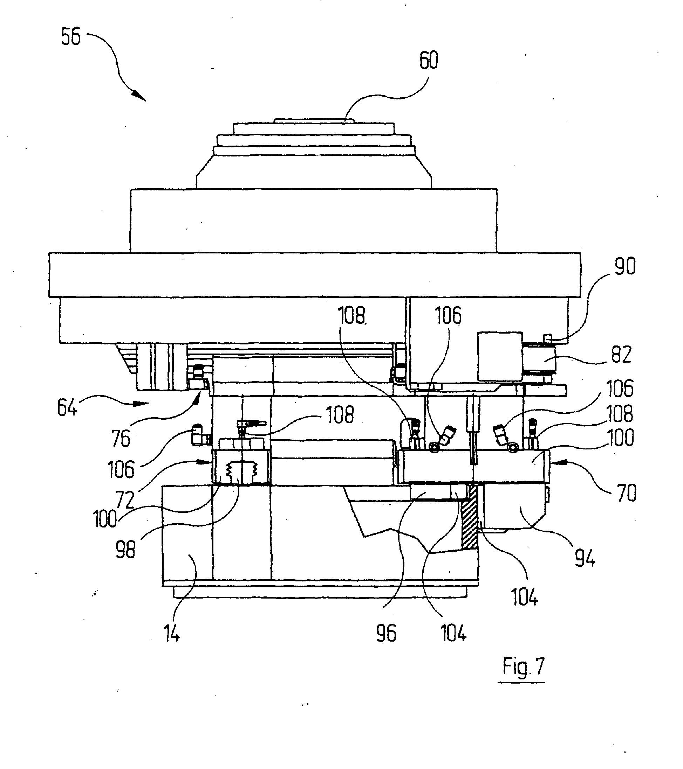

Der Greifkopf 56, der in Figuren 4 bis 7 im Detail längsseitig, von der Unterseite beziehungsweise querseitig dargestellt ist, umfasst einen Laserscanner 62 und eine Greifeinrichtung 64; beide sind in den Figuren 2 bis 5 sichtbar. In Figuren 6 und 7 ist der Laserscanner 62 der Übersichtlichkeit halber nicht gezeigt.

Der Laserscanner 62 befindet sich außen an der in Übergabe-Förderrichtung 28 hinteren Querseite des Greifkopfes 56, in Figur 2 nach vorne zeigend und in Figuren 3 bis 5 links. Unter ihm ist ein in Figuren 3 bis 5 sichtbarer Schutzbügel 66 angeordnet, der ihn in horizontaler Richtung überragt. Der Laserscanner 62 dient zur Erfassung der Art, der Größe, der Höhe, der Positionen und der Orientierung der Kleinlastträger 14, also dem Setzbild und der Höhenposition der obersten Schicht der Kleinlastträger 14 auf der zu entladenen Palette 16. Hierzu führt der Laser des Laserscanners 62 eine fächerartige Scan-Bewegung senkrecht zur Bewegungsrichtung des Greifkopfes 56 aus. Die Wellenlänge des Lasers liegt im sichtbaren Wellenlängenbereich. Der Laserstrahl 68 ist so gestaltet, dass er auch bei direktem Blick in den Laserstrahl 68 für ein menschliches Auge unschädlich ist (Laserklasse 2). Der Laserstrahl 68 ist in Querrichtung des Greifkopfes 56, also quer zur Übergabe-Förderrichtung 28, so weit aufgefächert, dass er selbst bei der vorgegebenen maximalen Stapelhöhe auch auf Höhe der Ränder der obersten Schicht von Kleinlastträgern 14 die gesamte Palettenbreite erfasst (Figur 2). Die Grenzen des fächerartig abgescannten Bereichs sind in der Figuren 2 und 3 mit gepunkteten Linien angedeutet. Durch Bewegen des Greifkopfes 56 mit dem Greifarm 38 entgegen der Übergabe-Förderrichtung 28 entlang der Palette 16 wird die oberste Lage von Kleinlastträgern 14 auf der Palette 16 abgescannt. Der Laserscanner 62 wird hierbei in Übergabe-Förderrichtung 28 etwa mittig über der Palette 16 bewegt. Mit Hilfe von Laufzeitmessungen sind mit der Steuereinrichtung unter Verwendung einer entsprechenden Programmroutine das Setzbild und die Höhenposition der obersten Schicht von Kleinlastträgern 14 bestimmbar.

Der Laserscanner 62 und der Roboter 36 sind zur Übergabe der mit dem Laserscanner 62 ermittelten Daten und zur Steuerung des Laserscanners 62 und des Roboters 36 funktional mit der Steuereinrichtung verbunden. Zwischen dem Laserscanner 62, dem Roboter 36 und der Steuereinrichtung ist ein Protokoll zur Datenübergabe und zur Prozesskontrolle, insbesondere für einen Start- oder Stopp-Trigger für das Scan-Verfahren und die Roboterbewegungen und zur Ausgabe von Fehlermeldungen, vereinbart.

Die Greifeinrichtung 64 ist an der Unterseite des Greifkopfes 56 angeordnet. Mit der Greifeinrichtung 64 können die Kleinlastträger 14 auf den Paletten 16 gepackt, mit dem Greifkopf 56 angehoben und nach entsprechendem Drehen des Drehkörpers 42 um die erste Achse mit dem Greifarm 38 auf dem Förderband 32 platziert werden.

Die Greifeinrichtung 64 weist, insbesondere in der Untersicht in Figur 5 sichtbar, vier relativ zu den Kleinlastträgern 14 bewegbare Außengreifer 70, 72, 74 und 76 jeweils zum Greifen eines Randes des jeweiligen Kleinlastträgers 14 auf. Die Bewegung der Außengreifer 70, 72, 74 und 76 erfolgt hierbei durch Bewegen des Greifkopfes 56 und/oder lediglich bei den Außengreifern 70, 72, 76 durch Verschieben relativ zum Greifkopf 56.

Ein längsseitig verschiebbarer Außengreifer ("längsseitiger Außengreifer" 70) ist auf einer geraden Längsführungsschiene 78, in Figur 5 oben waagerecht, verschiebbar befestigt. Der längsseitige Außengreifer 70 ist in Figur 5 oben links beziehungsweise in Figur 4 in einer anderen Position nach rechts hin verschoben gezeigt.

Ein querseitig verschiebbarer Außengreifer ("querseitiger Außengreifer" 72) ist auf einer geraden Querführungsschiene 80, in Figur 5 rechts senkrecht, verschiebbar befestigt. Der querseitige Außengreifer 72) ist in den Figuren 4 und 5 unten rechts gezeigt.

Die Längsführungsschiene 78 und die Querführungsschiene 80 verlaufen im rechten Winkel zueinander und sind bei normaler Orientierung des Greifkopfes 56, wie dies in Figuren 2, 3, 4, 6 und 7 dargestellt ist, horizontal ausgerichtet.

Die Querführungsschiene 80 befindet sich auf der dem Laserscanner 62 gegenüberliegenden Seite des Greifkopfes 56.

Der längsseitige Außengreifer 70 und der querseitige Außengreifer 72 sind zueinander proportional über einen jeweils endlosen längsseitigen Antriebsriemen 82 beziehungsweise querseitigen Antriebsriemen 84 mit einem Servomotor 86 entlang der entsprechenden Führungsschiene 78 beziehungsweise 80 bewegbar und auf diese Weise mit variablen Greifabständen auf unterschiedlich große Kleinlastträger 14 einstellbar. Der Servomotor 86 ist steuerbar mit der Steuereinrichtung verbunden.

Der Servomotor 86 ist auf der dem Laserscanner 62 gegenüberliegenden Querseite an dem dem geometrischen Schnittpunkt der beiden Führungsschienen 78 und 80 benachbarten Eck des Greifkopfes 56, in der längsseitigen Ansicht in Figur 4 oberhalb der Greifeinrichtung 64, angeordnet. Seine in Figur 5 sichtbare Antriebsachse 88 verläuft senkrecht zur Längsführungsschiene 78 und zur Querführungsschiene 80.

Der längsseitige Antriebsriemen 82 verläuft außerhalb des durch die vier Außengreifer 70, 72, 74 und 76 aufgespannten Bereichs parallel zur Längsführungsschiene 78. Er ist auf der dem Servomotor 86 gegenüberliegenden Querseite des Greifkopfes 56 über eine längsseitige, in Figuren 2, 5, 6 und 7 sichtbare, Umlenkrolle 90 geführt, welche sich im Eckbereich des Greifkopfes 56 befindet.

Der querseitige Antriebsriemen 84 verläuft entsprechend parallel zur Querführungsschiene 80. Eine querseitige Umlenkrolle 92, welche lediglich in Figur 5 sichtbar ist, befindet sich in dem der längsseitigen Umlenkrolle 90 diametral gegenüberliegenden Eckbereich des Greifkopfes 56.

Der längsseitige Antriebsriemen 82 ist seitlich betrachtet niedriger als der querseitige Antriebsriemen 84 angeordnet, was in den Figuren nicht sichtbar ist.

Ein fixer Außengreifer 74, in Figur 5 rechts oben, ist fest, also in der durch die Längsführungsschiene 78 und die Querführungsschiene 80 aufgespannten, im dargestellten Normalfall horizontalen Ebene nicht relativ zum Greifkopf 56 bewegbar.

Ein längsseitiger Gegengreifer 76, in Figur 5 links unten, ist unten an einem, in Figuren 3 und 4 sichtbaren Trägerkörper 103 befestigt, welcher über eine in den Figuren nicht sichtbare Heb- und Senkeinrichtung in seinem Abstand zur Unterseite des Greifkopfes 56, in der Normalposition des Greifkopfes 56 vertikal, verstellbar ist.

Die Heb- und Senkeinrichtung ist über eine in Figur 5 sichtbare Verbindungsstrebe 77, welche senkrecht zur längsseitigen Führungsschiene 78 verläuft, mit dem längsseitigen Außengreifer 70 verbunden und ist gemeinsam mit diesem in festem Abstand parallel zur längsseitigen Führungsschiene 78 verfahrbar. Die Heb- und Senkeinrichtung und mit ihr der längsseitige Gegengreifer 76 wird dabei auf einer in Figur 5 nicht sichtbaren Gegengreifer-Führungsschiene geführt, welche parallel zur längsseitigen Führungsschiene 78 verläuft.

Die Heb- und Senkeinrichtung ist mit der Steuereinrichtung steuerbar verbunden. Solange der Gegengreifer 76 nicht benötigt wird, beispielsweise wenn ein kleiner Kleinlastträger 14 gegriffen werden soll, ist er in seiner in den Figuren 2 bis 4, 6 und 7 dargestellten Ruheposition so weit oberhalb der anderen Außengreifer 70, 72 und 74 angeordnet, dass er beispielsweise den Rand eines zu greifenden benachbarten Kleinlastträger 14 nicht berührt und so nicht stört. Sobald er zum Greifen beispielsweise eines großen Kleinlastträgers 14 benötigt wird, ist er mit der Heb- und Senkeinrichtung vertikal auf die Höhe der anderen Außengreifer 70, 72 und 74 absenkbar, so dass mit ihm ein entsprechender Rand gegriffen werden kann.

Alle vier Außengreifer 70, 72, 74 und 76 sind Zweifach-Greifer, das heißt sie verfügen jeweils über eine äußere Greifbacke 94 und eine innere Greifbacke 96, welche eine zu den Kleinlastträger 14 hin, also im Normalfall nach unten offene Greifzange bilden. Die Greifbacken 94 und 96 weisen auf ihren der jeweiligen anderen Greifbacke 96 beziehungsweise 94 zugewandten Fläche zueinander parallele, vertikale Greifflächen auf. Die Greifbacken 94 und 96 sind jeweils auf einem in Figuren 2, 3, 4, 6 beziehungsweise 7 sichtbaren Schlitten 98 befestigt. Die Schlitten 98 sind in einer jeweiligen Linearführung 100 zum Greifen aufeinander zu und zum Lösen des Griffs voneinander weg führbar. Die Außengreifer 70, 72, 74 und 76 sind so auch auf unterschiedlich dicke Ränder der Kleinlastträger 14 einstellbar.

Die Linearführungen 100 des querseitigen Außengreifers 72, des längsseitigen Außengreifers 70 und des fixen Außengreifers 74, und somit auch die Außengreifer 70, 72 und 74 selbst, befinden sich in Seitenansicht auf gleicher Höhe in festem Abstand zur Unterseite des Greifkopfes 56 jeweils an der unteren, vom Greifkopf 56 abgewandten Stirnseite eines jeweiligen etwa quaderförmigen Grundkörpers 102.

Die Linearführung 100 des längsseitigen Gegengreifers 76 befindet sich unter dem Trägerkörper 103 und ist mit diesem vertikal bewegbar.

Die Linearführungen 100 des längsseitigen Außengreifers 70, des längsseitigen Gegengreifers 76 und des fixen Außengreifers 74 verlaufen in Querrichtung des Greifkopfes 56, also parallel zur Querführungsschiene 80. Mit diesen Außengreifern 70, 74 und 76 können die Ränder eines Kleinlastträgers 14 gegriffen werden, welche sich in Längsrichtung des Greifkopfes 56, also in Übergabe-Förderrichtung 28, erstrecken.

Die Linearführung 100 des querseitigen Außengreifers 72 verläuft senkrecht dazu in Längsrichtung (Figuren 6 und 7), so dass mit dem querseitigen Außengreifer 72 einer der Ränder in Querrichtung, also quer zur Übergabe-Förderrichtung 28, greifbar ist.

Die äußeren Greifbacken 94 sind in der Untersicht in Figur 5 auf der der nächstliegenden Außenseite des Greifkopfes 56 zugewandten Seite des jeweiligen Außengreifers 70, 72, 74 beziehungsweise 76, die inneren Greifbacken 96 auf der dem Zentrum des Greifkopfes 56 zugewandten Seite angeordnet. Auf diese Weise können die äußeren Greifbakken 94 die jeweiligen Ränder von außerhalb und die inneren Greifbacken 96 die Ränder von innerhalb der Kleinlastträger 14 aus packen.

Die entsprechende Dimension der Greifbacken 96 entspricht dem Abstand zwischen dem oberen Rand und dem unteren stufenförmigen Abschluß des Einstapelrandes eines standardisierten Kleinlastträgers 14; dies ist in Figuren 6 und 7, in denen der gegriffene Kleinlastträger 14 im Bereich des Außengreifers 70 im Teilschnitt gezeigt ist, sichtbar. Dies hat den Vorteil, dass die inneren Greifbacken 96 beim Greifen nicht durch Gegenstände in den Kleinlastträgern 14 behindert werden, die Kleinlastträger 14 also bis auf Höhe des unteren stufenförmigen Abschlusses des Einstapelrandes beladen werden können. Die vertikale Ausdehnung der äußeren Greifbacken 94 ist deutlich größer als die der inneren Greifbacken 96, so dass diese sicher und stabil an horizontalen Versteifungen anliegen können, wie sie sich üblicherweise außen an den Rändern der Kleinlastträger 14 befinden.

Die Greifbacken 94 und 96 haben darüber hinaus auf ihren Griffflächen jeweils eine austauschbare Greifplatte 104.

Alle Außengreifer 70, 72, 74 und 76 sind pneumatisch betätigbar, das heißt, die Schlitten 98 und damit die Greifbacken 94 und 96 können in an sich bekannter Weise über Druckluft zum Greifen zueinander gedrückt und so gehalten werden. In druckfreiem Zustand werden die Greifbackenpaare 94, 96 jeweils mit einer nicht gezeigten Druckfeder auseinandergedrückt. Jeder Außengreifer 70, 72, 74 und 76 verfügt an den Linearführungen 100 für jede der Greifbacken 94 und 96 über einen Pneumatik-Anschluss 106 zum Schließen des Griffs. Der Übersichtlichkeit halber wurden die Pneumatik-Anschlüsse 106 lediglich in den Figuren 4, 5, 6 und 7 mit Bezugszeichen versehen. Die Pneumatik-Anschlüsse 106 sind über nicht dargestellte Druckluftschläuche mit einer Drucklufteinrichtung verbunden und separat mit Druckluft beaufschlagbar. Die Drucklufteinrichtung ist steuerbar mit der Steuerungseinrichtung verbunden.

Darüber hinaus verfügt jeder Außengreifer 70, 72, 74 und 76 über einen in Figuren 4, 6 und 7 gezeigten Initiator 108, mit dem ein Signal erzeugt wird, sobald die Greifbackenpaare 94, 96 geschlossen sind, woraufhin eine weitere Druckluftzugabe gestoppt wird. Die Initiatoren 108 können das Signal beispielsweise abhängig von dem Druck der Druckluft an den Greifbacken 94 beziehungsweise 96 erzeugen. Die Initiatoren 108 sind über nicht gezeigte Signalleitungen mit der Steuereinrichtung der Depalettiervorrichtung 12 verbunden.

Im Übrigen verfügen alle Außengreifer 70, 72, 74 und 76 jeweils über einen in Figuren 4 und 5 sichtbaren Sensor 110 zur Erzeugung eines Signals, sobald der entsprechende Außengreifer 70, 72, 74 beziehungsweise 76 einen zum Greifen geeigneten vertikalen Abstand zu dem von ihm zu greifenden Rand hat. Die Sensoren 110 befinden sich jeweils seitlich der Greifbacken 94, 96 in deren Berührungsebene im geschlossenen Zustand. Sie sind in der Seitenansicht etwa auf Höhe der Schlitten 98 der Greifbacken 94, 96, so dass sie das Greifen nicht behindern, und nach unten gerichtet angebracht. Mit den Sensoren 110 ist so erfassbar, wenn der zu greifende Rand sich im richtigen Abstand zwischen den Greifbacken 94, 96 befindet.

Zur Depalettierung einer beladenen Palette 16 wird diese zunächst mit der Fördereinrichtung 18 zur Depalettiervorrichtung 12 befördert und dort beispielhaft mit einer Toleranz von ± 100 mm in einem für den Greifkopf 56 erreichbaren Bereich am Ende des Übergabe-Förderbandbereichs 24 bereitgestellt (Figuren 1 bis 3). Die Fördereinrichtung 18 wird dabei getaktet betrieben, derart, dass sobald eine Palette 16 entladen ist, die nächste beladene Palette 16 zur Depalettiervorrichtung 12 befördert wird.

Sobald die Palette 16 sich am Ende des Übergabe-Förderbandbereichs 24 befindet, also die Sicht des Laserscanners 62 nicht mehr durch eine etwaige vorherige Palette 16 versperrt werden kann, wird eine Routine zum Ermitteln des Setzbildes der obersten Schicht von Kleinlastträgern 14 gestartet. Hierzu wird zunächst mit dem Roboter 36 der Greifkopf 56 über der Palette 16 so positioniert, dass seine Längsrichtung parallel zur Übergabe-Förderrichtung 28 verläuft. Der Greifkopf 56 wird hierbei so ausgerichtet, dass der Laserscanner 62 sich in Übergabe-Förderrichtung 28 betrachtet etwa mittig über der Palette 16 (Figur 2) und senkrecht zur Übergabe-Förderrichtung 28 betrachtet auf Höhe des der Depalettiervorrichtung 12 zugewandten Randes der obersten Schicht (Figur 3) befindet. Der Abstand eines in Figur 5 sichtbaren Austrittsfensters 112 des Laserscanners 62 zur obersten Schicht beträgt dabei beispielhaft zwischen 900 mm und 1700 mm. Der fächerartig abscannende Laserstrahl 68 deckt dann die gesamte Breite der obersten Schicht ab.

Anschließend wird der Greifkopf 56 entgegen der Übergabe-Förderrichtung 28 mit konstanter Geschwindigkeit horizontal oberhalb der Palette 16 bewegt, ohne im Übrigen seine Ausrichtung im Raum zu verändern. Hierbei wird die oberste Schicht der Kleinlastträger 14 fortlaufend in einzelnen Scan-Scheiben (Sektoren) mit dem Laserscanner 62 abgescannt. Aus den so ermittelten Daten wird daraufhin ein dreidimensionales Oberflächenprofil der Beladung (Setzbild) berechnet und der Steuereinrichtung zugeführt. Über eine Objekterkennungsroutine wird mit der Steuereinrichtung aus dem Setzbild erkannt, ob, welche und an welcher Position auf der Palette 16 Kleinlastträger 14 zum Greifen bereitstehen, insbesondere wo und wie deren Ränder verlaufen. Sofern Kleinlastträger 14 vorhanden sind, werden die zum Greifen relevanten Daten, insbesondere deren Raumlage und ihre Orientierung, insbesondere ihre Drehwinkel, relativ zu einem Koordinatensystem des Roboters 36 bestimmt.

Werden beim Abscannen fehlerhafte Kleinlastträger 14 erkannt, so kann vorgesehen sein, dass eine Störungsmeldung an eine nicht dargestellte Ausgabeeinheit ausgegeben und der Depalettierprozess gestoppt wird. Nach dem Entfernen des fehlerhaften Kleinlastträgers 14 kann das Verfahren insbesondere mit einem erneuten Abscannen der obersten Schicht fortgesetzt werden.

Auch eine Nicht-Greifbarkeit der Kleinlastträger 14 kann erkannt werden und über eine Schnittstelle an die Steuereinrichtung übermittelt werden. Beispielsweise kann vorgesehen sein, eine Fehlermeldung auszugeben wenn Ladungsteile in den Kleinlastträgern 14 entlang der Greifpositionen erkannt werden, welche die Greifbarkeit stören oder gar verhindern. Die Störung kann daraufhin manuell oder automatisch behoben werden. Zum Wiederanlauf des automatischen Depalettiervorgangs kann die Palette 16 nochmals abgescannt werden, um das Setzbild nach den störungsbeseitigenden Maßnahmen zu erfassen.

Nach Vorliegen aller zum Greifen relevanten Daten wird mit dem Roboter 36 der Greifkopf 56 über den zu greifenden Kleinlastträger 14 bewegt, bei dem wenigstens zwei der vier Seitenwände frei, also greifbar sind. Vorzugsweise ist dies ein Kleinlastträger 14 am Rand der obersten Schicht.

Der Greifkopf 56 wird dabei so angeordnet, dass der fixe Außengreifer 74 im Eckbereich einer frei zugänglichen Seitenwand des Kleinlastträgers 14 positioniert ist.

Der längsseitige Außengreifer 70 und der querseitige Außengreifer 72 werden, angetrieben durch den Servomotor 86 mit den entsprechenden Antriebsriemen 82 beziehungsweise 84, entlang der Längsführungsschiene 78 beziehungsweise der Querführungsschiene 80 auf ihre jeweilige Position zum Greifen des entsprechenden Randes des Kleinlastträgers 14 relativ zu diesem verfahren.

Sobald mit den Sensoren 110 erfasst wird, dass die Außengreifer 70, 72, und 74 in ihrer Greifposition sind, also die jeweiligen Greifbacken 94 und 96 im geeigneten Abstand paarweise beidseitig des jeweiligen Randes positioniert sind, werden die entsprechenden Pneumatik-Anschlüsse 106 zum Schließen der Außengreifer 70, 72, und 74 mit Druckluft beaufschlagt und der fixe Außengreifer 74, der längsseitige Außengreifer 70 und der querseitige Außengreifer 72 geschlossen. Die entsprechenden Ränder sind dann zwischen den Greifbacken 94 und 96 fest eingeklemmt. Ein entsprechendes Signal wird von den Initiatoren 108 erzeugt und der Steuereinrichtung zugeleitet.

Der nun mit drei Außengreifern 70, 72, und 74 an zwei Seitenwänden gegriffene Kleinlastträger 14 wird um die Höhe des Einstapelrandes, beispielhaft um etwa 20 mm, angehoben, um das Schließen des Gegengreifers 76 zu ermöglichen. Hierbei wird der Gegengreifer 76 mit seiner Hebund Senkeinrichtung auf die Höhe der anderen Außengreifer 70, 72, und 74 abgesenkt, so dass er analog zu den anderen Außengreifern 70, 72, und 74 den ihm entsprechenden Rand greifen kann. Seine Initiatoren 108 und Sensoren 110 übermitteln hierbei der Steuereinrichtung seine korrekte Position.

Bei kleineren Kleinlastträgern 14 kann auf das Greifen des Gegengreifers 76 verzichtet werden. In diesem Fall wird der Gegengreifer 76 nicht abgesenkt.

Der Greifkopf 56 mit dem Kleinlastträger 14 wird nun weiter angehoben, so dass dessen Boden oberhalb der Ränder der benachbarten Kleinlastträger 14 ist, und der Drehkörper 42 mit dem Greifarm 38 horizontal soweit gedreht, bis der Greifkopf 56 über dem Förderband 32 positioniert ist. Dabei wird die Längsrichtung des Greifkopfes 56 in Förderbandrichtung 34 ausgerichtet. Hierzu wird der Greifkopf 56 mit dem Flansch 54 horizontal um die sechste Achse entsprechend gedreht.

Der Kleinlastträger 14 wird sodann auf dem Förderband 32 abgesetzt. Dies wird mit einer in Figur 1 gezeigten Lichtschranke 131 erkannt. Ein Lichtstrahl der Lichtschranke 131 verläuft zu diesem Zweck in dem Bereich des Förderbandes 32, in dem der Kleinlastträger 14 abgesetzt werden soll, horizontal schräg über dem Förderband 32 in einem Abstand von etwa 20 cm zu diesem. Sobald der untere Rand des Kleinlastträgers 14 den Lichtstrahl unterbricht, übermittelt die Lichtschranke 131 ein entsprechendes Signal an die Steuereinrichtung, die daraufhin den Kleinlastträger 14 um die restlichen 20 cm absenken lässt. Unabhängig von der Höhe des Kleinlastträgers 14 ermittelt so die Steuereinheit, wann dessen Boden auf dem Förderband 32 aufsetzt. Der Lichtstrahl der Lichtschranke 131 ist der besseren Verständlichkeit wegen in Figur 1 durchgängig gezeigt, obwohl er durch den dort auf dem Förderband abgestellt gezeigten Kleinlastträger 14 unterbrochen ist.

Die Pneumatik-Anschlüsse 106 werden daraufhin mit der Druckeinrichtung druckfrei geschaltet, um die Außengreifer 70, 72, 74 und 76 zu öffnen.

Schließlich wird der Greifkopf 56 mit dem Greifarm 38 angehoben und wieder zurück zur Palette 16 bewegt, um den nächsten Kleinlastträger 14 zu greifen.

Auf diese Weise werden nacheinander alle Kleinlastträger 14 der obersten Schicht depalettiert.

Anschließend wird das Verfahren, beginnend mit dem Abscan-Vorgang der jeweils nächsten obersten Schicht, so lange wiederholt, bis die Palette 16 vollständig entladen ist.

Sobald die Palette 16 leer ist, wird sie im nächsten Fördertakt zu dem Abfuhr-Förderbandbereich 22 und mit diesem zum Palettenlager befördert und die nächste beladene Palette 16 mit dem Übergabe-Förderbandbereich 24 zur Depalettiervorrichtung 12 befördert und dort, wie oben beschrieben, entladen. Gleichzeitig werden die nachfolgenden beladenen Paletten 16 mit dem Zufuhr-Förderbandbereich 20 zum Übergabe-Förderbandbereich 24 transportiert.

Tests ergaben, dass das Herunterladen beispielsweise von 10 Kleinlastträger 14 bei dem praktischen Ausführungsbeispiel etwa 80 Sekunden dauert. Der gesamte Depalettiervorgang inklusive des Scanvorgangs und der Auswerte- und Übertragungszeit für die Daten beläuft sich auf etwa 90 Sekunden. Unter Berücksichtigung von Förder- und Wechselzeiten für Paletten 16 können so im Mittel etwa 6 Kleinlastträger 14 pro Minute depalettiert werden.

Bei einem nicht dargestellten alternativen Ausführungsbeispiel kann der Laserscanner 62 statt am Greifkopf 56 separat von diesem angeordnet sein und über eine eigene Sensorachse mit einem Antriebsmotor getrennt vom Greifkopf 56 zum Abscannen der Palette 16 bewegbar sein.

In diesem Fall kann das Koordinatensystem des Roboters 36 vor dem Abscan-Vorgang beispielsweise unter Verwendung von Referenzmarken mit einem Koordinatensystem des Laserscanners 62 abgeglichen werden. Die Referenzmarken befinden sich bevorzugt auf der Palette 16. Sie definieren jeweils Masterlagen sowohl für den Roboter 36 als auch für den Laserscanner 62.

Die beim Abscannen ermittelte Raumlage und Orientierung des Kleinlastträgers 14 wird dann mit einer der Masterlagen verglichen, die sich in der Nähe des aktuellen Lagepunktes des Kleinlastträgers 14 befindet. Aus dem Vergleich wird eine Lagekorrektur bezüglich der entsprechenden Referenzmarke berechnet und dem Roboter 36 mitgeteilt. Auf diese Weise wird eine Lagefehler des Greifkopfes 56 relativ zum Laserscanner 62 teilweise kompensiert. Eine Lagedrift des Greifkopfes 56 kann durch zyklisches Referenzieren ermittelt werden. Bei dem praktischen Beispiel können die Koordinatensysteme des Laserscanners 62 und des Roboters 36 so aufeinander abgestimmt werden, dass eine Genauigkeit von etwa ± 2 mm erreicht werden kann. Auf diese Weise können Scan-Felder mit Flächen von etwa 1250 mm x 850 mm und größer bei einem Abstand des Laserscanners 62 von der obersten Palettenschicht von etwa 900 mm abgescannt werden.

Bei allen beschriebenen Ausführungsbeispielen können sämtliche beim Scanvorgang auftauchenden Störungen mit einer nicht gezeigten Speicher- und Ausgabeeinheit, insbesondere einem Personalcomputer, erfasst und angezeigt werden. Zusätzlich können die Störungsmeldungen mit Datum und Uhrzeit in einer Datei auf der Speicher- und Ausgabeeinheit protokolliert werden. Die Aufnahmen von Kleinlastträgern 14, die vom Laserscanner 62 nicht identifiziert wurden, können ebenfalls mit Datum, Uhrzeit und dem Grund für das Nicht-Identifizieren auf der Speicher- und Ausgabeeinheit protokolliert werden.

Die Vorrichtung und das Verfahren können entsprechend modifiziert auch zur Palettierung von Behältern, insbesondere von Kleinlastträgern 14, verwendet werden.

Statt Kleinlastträgern 14 können auch andere, einen greifbaren Rand aufweisende, standardisierte oder nicht standardisierte Behälter palettiert beziehungsweise depalettiert werden.

Die Kleinlastträger 14 auf einer Palette 16 können gleich oder unterschiedlich sein. Die Setzbilder können vordefiniert sein.

Statt das Setzbild aller Kleinlastträger 14 zu ermitteln, kann auch nur die Lage und die Orientierung des jeweils zu greifenden Kleinlastträgers 14 bestimmt werden.

Anstelle von Paletten 16 können auch andersartige Trägereinrichtungen verwendet werden.

Es können auch mehrere Sensoreinrichtungen, insbesondere Laserscanner 62 vorgesehen sein.

Die Greifeinrichtung 64 kann auch über nur einen Außengreifer oder mehr als vier Außengreifer 70, 72, 74 und 76 verfügen. Es können auch Außengreifer zur optionalen Nachrüstung vorgesehen sein.

Jeder der Außengreifer 70, 72, 74 und 76 kann statt als Zweifach-Greifer auch als Dreifach-Greifer mit drei Greifbacken 94, 96 realisiert sein, mit dem an einer Ecke des Behälters gleichzeitig zwei senkrecht zueinander verlaufende Ränder gegriffen werden können.

Ferner können ein oder mehrere Außengreifer 70, 72, 74 und 76 eine Greifkraftsicherung oder einen Untergriff haben, mit der beziehungsweise dem sichergestellt wird, dass die gegriffenen Ränder nicht herausrutschen.

Der Laser des Laserscanners 62 kann auch im nicht sichtbaren Wellenlängenbereich abstrahlen.

Statt des Laserscanners 62 kann auch eine andersartige, insbesondere optische Sensoreinrichtung vorgesehen sein, mit der beispielsweise auch Farben erfassbar sind.

Die Sensoreinrichtung kann auch so ausgestaltet sein, dass mit ihr die Farbe der Kleinlastträger 14 als zusätzliches Identifikationsmerkmal erfassbar ist.

## Patentansprüche

1. Vorrichtung (12) zur automatischen Palettierung
und/oder Depalletierung von Behältern (14), insbesondere von Kleinlastträgern, mit einer Steuereinrichtung, die mit wenigstens einer Sensoreinrichtung (62) zur Erfassung der Lage und/oder der Orientierung wenigstens eines zu greifenden Behälters (14) und mit einer Greifeinrichtung (64) zum Greifen des Behälters (14) funktional verbunden ist, wobei die Greifeinrichtung (64) wenigstens drei relativ zu dem Behälter (14) bewegbare Außengreifer (70, 72, 74, 76) zum Greifen wenigstens eines Randes des Behälters (14) aufweist, wobei wenigstens zwei Außengreifer (70, 72, 74, 76) zueinander motorisch (86) bewegbar sind, und die Außengreifer (70, 72, 74, 76) über wenigstens zwei Greifbacken (94, 96) verfügen,
**dadurch gekennzeichnet, dass**
zwei Außengreifer (70, 72) im rechten Winkel zueinander verschiebbar sind.

2. Vorrichtung nach Anspruch 1, **dadurch gekennzeichnet, dass** die Außengreifer Zweifach-Greifer (70, 72, 74, 76) oder Dreifach-Greifer sind.

3. Vorrichtung nach einem der vorhergehenden Ansprüche, **dadurch gekennzeichnet, dass** wenigstens zwei Außengreifer (70, 72) proportional zueinander bewegbar sind.

4. Vorrichtung nach einem der vorhergehenden Ansprüche,
**dadurch gekennzeichnet, dass** wenigstens ein zusätzlicher Außengreifer (Gegengreifer 76) wenigstens vertikal bewegbar ist.

5. Vorrichtung nach einem der vorhergehenden Ansprüche,
**dadurch gekennzeichnet, dass** die Außengreifer (70, 72, 74, 76) pneumatisch betätigbar sind.

6. Vorrichtung nach einem der vorhergehenden Ansprüche,
**dadurch gekennzeichnet, dass** die Außengreifer (70, 72, 74, 76) über eine Sicherung gegen Herausrutschen des gegriffenen Behälters (14) verfügen.

7. Vorrichtung nach einem der vorhergehenden Ansprüche,
**dadurch gekennzeichnet, dass** die Außengreifer (70, 72, 74, 76) über wenigstens einen Initiator (108) verfügen, der erfaßt, wenn sich die Greifbacken (94, 96) des Außengreifers (70, 72, 74, 76) am Rand des Behälters (14) geschlossen haben.

8. Vorrichtung nach einem der vorhergehenden Ansprüche, **dadurch gekennzeichnet, dass** die Greifbacken (94, 96) austauschbare Greifplatten (104) haben.

9. Vorrichtung nach einem der vorhergehenden Ansprüche,
**dadurch gekennzeichnet, dass** die Sensoreinrichtung über ein Lasermesssystem, insbesondere über einen Laserscanner (62), verfügt, das die Position, die Orientierung, die Größe und/oder den Typ des Behälters (14) erfasst.

10. Vorrichtung nach einem der vorhergehenden Ansprüche, **dadurch gekennzeichnet, dass** die Sensoreinrichtung (62) und die Greifeinrichtung (64) an einem Greifkopf (56) insbesondere eines Roboters (36) angeordnet sind.

11. Verfahren zur automatischen Palettierung und/oder
Depalletierung von Behältern (14), insbesondere von Kleinlastträgern, bei dem die Lage und/oder die Orientierung wenigstens eines zu greifenden Behälters (14) erfasst und abhängig von dieser der Behälter (14) gegriffen wird, wobei wenigstens drei Außengreifer (70, 72, 74, 76) der Greifeinrichtung (64) relativ zu dem Behälter (14) bewegt werden und mit wenigstens zwei Greifbacken (94, 96) wenigstens einen Rand des Behälters (14) greifen, wobei wenigstens zwei der Außengreifer (70, 72, 74) zueinander motorisch (86) bewegt werden,
**dadurch gekennzeichnet, dass**
zwei der Außengreifer (70, 72) im rechten Winkel zueinander verschoben werden.

12. Verfahren nach Anspruch 11, **dadurch gekennzeichnet,**
**dass** die Lage und/oder die Orientierung des Behälters (14) optisch erfasst wird, insbesondere der Behälter (14) mit einem Laser (62) durch Laufzeitmessungen abgetastet wird, hierauf die Außengreifer (70, 72, 74, 76) zum Rand des Behälters (14) bewegt werden, derart, dass mindestens zwei der Greifbacken (94, 96) beidseitig des Randes positioniert sind und anschließend wenigstens eine der Greifbacken (94, 96) auf die zweite zu geführt wird, so dass der Rand zwischen den beiden Greifbacken (94, 96) eingeklemmt wird.

## Claims

1. Apparatus for the automatic palletising and/or depalletising of containers (14), in particular small-load carriers, having a control device which is functionally connected to at least one sensor device (62) for detecting the position and/or the orientation of at least one container (14) to be gripped and to a gripping device (64) for gripping the container (14), the gripping device (64) having at least three outer grippers (70, 72, 74, 76) movable relative to the container (14) for gripping at least one edge of the container (14), at least two outer grippers (70, 72, 74, 76) being movable by motor (86) and the outer grippers (70, 72, 74, 76) having at least two gripping jaws (94, 96),
**characterised in that**
two outer grippers (70, 72) are displaceable at right angles to one another.

2. Apparatus according to claim 1, **characterised in that** the outer gripper is a double gripper (70, 72, 74, 76) or a triple gripper.

3. Apparatus according to one of the preceding claims, **characterised in that** at least two outer grippers (70, 72) are proportionally movable to one another.

4. Apparatus according to one of the preceding claims, **characterised in that** at least one additional outer gripper (opposed gripper 76) is at least vertically movable.

5. Apparatus according to one of the preceding claims, **characterised in that** the outer grippers (70, 72, 74, 76) are pneumatically actuable.

6. Apparatus according to one of the preceding claims, **characterised in that** the outer grippers (70, 72, 74, 76) have a safeguard to prevent the gripped container (14) from slipping out.

7. Apparatus according to one of the preceding claims, **characterised in that** the outer grippers (70, 72, 74, 76) have at least one initiator (108) which detects when the gripping jaws (94, 96) of the outer gripper (70, 72, 74, 76) have closed on the edge of the container (14).

8. Apparatus according to one of the preceding claims, **characterised in that** the gripping jaws (94, 96) have exchangeable gripping plates (104).

9. Apparatus according to one of the preceding claims, **characterised in that** the sensor device has a laser measuring system, in particular a laser scanner (62), which detects the position, orientation, size and/or type of the container (14).

10. Apparatus according to one of the preceding claims, **characterised in that** the sensor device (62) and the gripping device (64) are arranged on a gripping head (56) in particular of a robot (36).

11. Process for the automatic palletising and/or depalletising of containers, in particular small-load carriers, in which the position and/or the orientation of at least one container to be gripped is detected and the container is gripped in dependence on this, wherein at least three outer grippers (70, 72, 74, 76) of the gripping device (64) are moved relative to the container (14) and grip with at least two gripping jaws (94, 96) at least one edge of the container (14), at least two outer grippers (70, 72, 74) being moved to one another by motor (86),
**characterised in that**
two of the outer grippers (70, 72) are displaceable at right angles to one another.

12. Process according to claim 11, **characterised in that** the position and/or the orientation of the container (14) is optically detected, in particular the container (14) is scanned by a laser (62) by time-of-flight measurements, whereupon the outer grippers (70, 72, 74, 76) are moved to the edge of the container (14), in such a way that at least two of the gripping jaws (94, 96) are positioned on both sides of the edge and subsequently at least one of the gripping jaws (94, 96) is guided towards the second, so that the edge is clamped between the two gripping jaws (94, 96).

## Revendications

1. Dispositif (12) de palettisation et/ou de dépalettisation automatique de récipients (14), en particulier d'éléments porteurs de charges de petite taille, avec un équipement de commande qui est fonctionnellement relié à au moins un équipement de détection (62) pour détecter la position et/ou l'orientation d'au moins un récipient (14) à saisir, et à un équipement de prise (64) pour saisir le récipient (14), sachant que l'équipement de prise (64) présente au moins trois preneurs extérieurs (70, 72, 74, 76), mobiles par rapport au récipient (14) et destinés à saisir au moins un bord du récipient (14), sachant qu'au moins deux preneurs extérieurs (70, 72, 74, 76) sont mobiles les uns par rapport aux autres de façon motorisée (86), et sachant que les preneurs extérieurs (70, 72, 74, 76) disposent d'au moins deux mâchoires de prise (94, 96),
**caractérisé en ce que** deux preneurs extérieurs (70, 72) sont mobiles en translation à angle droit l'un de l'autre.

2. Dispositif selon la revendication 1, **caractérisé en ce que** les preneurs extérieurs sont des preneurs doubles (70, 72, 74, 76) ou des preneurs triples.

3. Dispositif selon l'une des revendications précédentes, **caractérisé en ce qu'**au moins deux preneurs extérieurs (70, 72) peuvent être déplacés de façon proportionnelle l'un par rapport à l'autre.

4. Dispositif selon l'une des revendications précédentes, **caractérisé en ce qu'**au moins un preneur extérieur supplémentaire (contre-élément de prise 76) est au moins verticalement mobile.

5. Dispositif selon l'une des revendications précédentes, **caractérisé en ce que** les preneurs extérieurs (70, 72, 74, 76) peuvent être actionnés pneumatiquement.

6. Dispositif selon l'une des revendications précédentes, **caractérisé en ce que** les preneurs extérieurs (70, 72, 74, 76) disposent d'une sécurité empêchant le récipient saisi (14) de glisser.

7. Dispositif selon l'une des revendications précédentes, **caractérisé en ce que** les preneurs extérieurs (70, 72, 74, 76) disposent d'au moins un déclencheur (108), qui détecte lorsque les mâchoires de prise (94, 96) se sont fermées sur le bord du récipient (14).

8. Dispositif selon l'une des revendications précédentes, **caractérisé en ce que** les mâchoires de prise (94, 96) possèdent des plaques de prise remplaçables (104).

9. Dispositif selon l'une des revendications précédentes, **caractérisé en ce que** l'équipement de détection dispose d'un système de mesure à laser, en particulier d'un balayeur laser, qui détecte la position, l'orientation, la taille et/ou le type du récipient (14).

10. Dispositif selon l'une des revendications précédentes, **caractérisé en ce que** l'équipement de détection (62) et l'équipement de prise (64) sont disposés sur une tête de prise (56), en particulier d'un robot (36).

11. Procédé de palettisation et/ou de dépalettisation automatique de récipients (14), en particulier d'éléments porteurs de charges de petite taille, selon lequel on détecte la position et/ou l'orientation d'au moins un récipient (14) à saisir, et on saisit le récipient (14) en fonction de cette détection, sachant qu'au moins trois preneurs extérieurs (70, 72, 74, 76) de l'équipement de prise (64) sont déplacés par rapport au récipient (14) et saisissent au moins un bord du récipient (14) par au moins deux mâchoires de prise (94, 96), sachant qu'au moins deux des preneurs extérieurs (70, 72, 74) sont déplacés les uns par rapport aux autres de façon motorisée (86),
**caractérisé en ce que** deux des preneurs extérieurs (70, 72) sont déplacés en translation à angle droit l'un de l'autre.

12. Procédé selon la revendication 11, **caractérisé en ce qu'**on enregistre optiquement la position et/ou l'orientation du récipient (14), en particulier on explore le récipient (14) avec un laser (62) par des mesures de temps de propagation, à la suite de quoi les preneurs extérieurs (70, 72, 74, 76) sont déplacés vers le bord du récipient (14), de telle sorte qu'au moins deux des mâchoires de prise (94, 96) sont positionnées de part et d'autre du bord, et qu'ensuite au moins une des mâchoires de prise (94, 96) est dirigée en direction de la deuxième, de sorte que le bord est serré entre les deux mâchoires de prise (94, 96).
